# EUROPÄISCHE PATENTSCHRIFT

(11) **EP 3 847 581 B1**
(45) Veröffentlichungstag und Bekanntmachung des Hinweises auf die Patenterteilung: **06.09.2023**
(21) Anmeldenummer: 19742057.3
(22) Anmeldetag: 24.07.2019
(51) Int. Cl.: G06K 19/077, H01Q 1/12, H01Q 1/22, H01Q 9/26, B60J 1/00, H01Q 1/32, H01Q 19/10

(54) **FAHRZEUGSCHEIBE MIT EINEM TRANSPONDER**
VEHICLE PANE WITH TRANSPONDER
VITRE DE VÉHICULE AVEC TRANSPONDEUR

(30) Priorität: 03.09.2018 EP 18192178
(43) Veröffentlichungstag der Anmeldung: 14.07.2021
(73) Patentinhaber: SAINT-GOBAIN GLASS FRANCE, 92400 Courbevoie (FR)
(72) Erfinder: HOLTSTIEGE, Thomas, 58332 Schwelm (DE); SCHMITZ, Tim, 52072 Aachen (DE); DROSTE, Stefan, 52134 Herzogenrath (DE)
(74) Vertreter: Weber, Sophie
(86) Internationale Anmeldenummer: PCT/EP2019/069862
(87) Internationale Veröffentlichungsnummer: WO 2020/048677

(56) Entgegenhaltungen:
- WO-A1-2017/081052
- DE-A1-102010 039 709
- JP-A- H04 326 203
- JP-A- 2002 359 565
- US-B1- 6 320 509
- SINGH D ET AL: "Frequency doubling active transponder in car windscreen", ELECTRONICS LET, IEE STEVENAGE, GB, Bd. 33, Nr. 21, 9. Oktober 1997 (1997-10-09), Seiten 1799-1800, XP006008059, ISSN: 0013-5194, DOI: 10.1049/EL:19971210

## Beschreibung

Die Erfindung betrifft eine Fahrzeugscheibe mit einem Transponder, ein Verfahren zu deren Herstellung und die Verwendung der Fahrzeugscheibe in Fortbewegungsmitteln.

Transponder, die sich auf Objekten befinden, z.B. Waren und Gütern, und die durch Auslesegeräte mit Sende- und Empfangseinheiten ausgelesen werden, sind allgemein bekannt. Ein solcher Transponder wird zur Identifikation von diesen Objekten verwendet und ist üblicherweise ein Teil eines Identifikationssystems. Derartige Systeme zur Identifikation bestehen unter anderem aus einen stationären Lesegerät und einem mobilen Transponder, der an dem zu identifizierenden Objekt angebracht ist. Heutzutage ist der mobile Transponder ein RFID (Radio Frequency IDentification)-Transponder, der aus einem RFID-Chip und einer separaten Antenne besteht.

Die Zuverlässigkeit beim Auslesen eines Identifikationssignals ist von hoher Bedeutung, so beispielsweise beim Straßenverkehr. Die Kommunikation zwischen Lesegerät und mobilem Transponder mit den bekannten funktechnischen Problemen der unerwünschten Reflexion, Absorption und Abschirmung führt oft zu ungenügenden Leseergebnissen und Schreibergebnissen in der Kommunikation mit dem jeweiligen Transponder. Die bekannten Auslesesysteme, die häufig die Form eines Tores (Gates) haben, durch das ein zu registrierendes und mit einem RFID-Transponder ausgestattetes Fahrzeug hindurch fährt, haben den Nachteil, dass das Identifikationssignal aufgrund der geringen Signalstärke manchmal nicht erfasst werden kann.

DE 20 2016 013 938 A1 beschreibt eine Fahrzeugvorrichtung mit einer elektronischen Identifikations- und/oder Bezahleinheit mit einer RFID-Einheit. Die RFID-Einheit umfasst ein Leseelement und ein Ausgabeelement. Das Leseelement ist in einem Fahrzeuginnenraum angeordnet und erfasst die identifikations- und/oder Bezahlinformation eines RFID-Chips. Die erfassten Identifikations- und/oder Bezahlinformationen werden dupliziert und in das Ausgabeelement kopiert. Das Ausgabeelement ist an einer Fahrzeugaußenseite angeordnet und leitet die Identifikations-und/oder Bezahlinformation an ein externes Lesegerät kontaktlos weiter. Abgesehen von dem benötigten hohen Aufwand an elektronischen Komponenten muss das Ausleseelement außen am Fahrzeug verbaut werden und ist gegenüber der Umwelt nicht abgeschirmt, so dass es zu unerwünschten Wechselwirkungen mit der Umwelt kommen kann.

JP H04 326203 A offenbart eine sogenannte Patch Antenne an einer Windschutzscheibe eines Fahrzeugs. Die Antenne weist eine metallische Folie auf einer Außenseite und eine metallische Folie, die geerdet ist, auf der Innenseite der Windschutzscheibe auf. Anspruch 1 ist gegen dieses Dokument abgegrenzt.

JP 2002 359565 A offenbart einen Autonavigator, der eine Kommunikationsvorrichtung umfasst. Die Kommunikationsvorrichtung ist im Frontbereich angeordnet um die Antennenrichtung in den Innenraum des Fahrzeugs zu richten. Die Kommunikationsvorrichtung kommuniziert über ein am Innendach des Fahrzeugs angeordnetes Relais (Repeater) mit einem im Fahrzeug befindlichen mobilen Endgerät.

Die Veröffentlichung von D. Singh et al "Frequency doubling active transponder in car windscreen", Electronics Let, IEE Stevenage, GB, Bd. 33, Nr. 21 (09.10.1997), Seiten 1799-1800 beschreibt experimentelle Ergebnisse eines in einer Windschutzscheibe angeordneten Transponders.

Der Erfindung liegt daher die Aufgabe zu Grunde, eine Fahrzeugscheibe mit einem Transponder bereitzustellen, die eine erhöhte Kommunikationsqualität aufweist.

Die Aufgabe konnte daher durch eine Fahrzeugscheibe gemäß Anspruch 1 und ein Fahrzeug gemäß Anspruch 13 gelöst werden. Bevorzugte Ausgestaltungen der Erfindung sind in den abhängigen Ansprüchen wiedergegeben.

Die Erfindung betrifft somit eine Fahrzeugscheibe, die eine erste Glasscheibe und einen Transponder umfasst. Der Transponder verfügt über zumindest eine Antenne und eine Steuereinheit zur Kommunikation mit einem Lesegerät, wobei die Steuereinheit einen Speicher zum Speichern von Identifikationsdaten umfasst. Die Steuereinheit ist vorzugsweise ein Halbleiter-Chip, der den Speicher zum Speichern von Identifikationsdaten aufweist. Sowohl die Steuereinheit mit dem Speicher als auch die Antenne können auf einem Substrat angeordnet sein. Das Substrat kann ein dielektrisches Material aufweisen, das über eine außenseitige Oberfläche des Substrats mit einer Oberfläche der Glasscheibe verbunden ist, bevorzugt durch Kleben. Die Fahrzeugscheibe weist zumindest einen dem Transponder zugeordneten Reflektor auf, der zum Transponder beabstandet und zum Erhöhen eines Antennengewinns der Antenne vorgesehen ist, wobei der Reflektor als eine transparente, elektrisch leitfähige Beschichtung und/oder als ein metallischer Ring ausgebildet ist. Die konkrete Position an oder in der Fahrzeugscheibe ergibt sich aus dem Begriff "zugeordneter Reflektor" dahingehend, dass er natürlich der jeweiligen Antennenposition zugeordnet sein und zur Erzielung einer verstärkenden Wirkung ausreichend dimensioniert sein muss.

Des Weiteren ist vorgesehen, dass der Transponder und der Reflektor innerhalb der Fahrzeugscheibe angeordnet sein können.

Um den Antennengewinn eines Transponders auf einer Fahrzeugscheibe zu erhöhen, wird die Abstrahlung gebündelt. Über den Reflektor kann die Abstrahlung der Antenne derart gebündelt werden, dass sich ein höherer Antennengewinn ergibt. Die so erreichte Verstärkung eines vom Transponder gesendeten und empfangenen Signals kann insbesondere aus einer senkrechten Richtung zur Oberfläche der Fahrzeugscheibe besonders gut gemessen werden. Durch den höheren Antennengewinn wird die Reichweite und Empfindlichkeit des Transponders aus einer senkrechten Richtung zur Oberfläche der Fahrzeugscheibe vergrößert, so dass der Transponder durch ein entsprechendes externes Lesegerät aus einer weiteren Entfernung erfasst werden kann. Signal bedeutet im Rahmen der hier vorliegenden Erfindung eine hochfrequente elektromagnetische Strahlung, die von der Steuereinheit über die Antenne gesendet und/oder empfangen wird.

Vorteilhafterweise kann die Fahrzeugscheibe zum Ende des Herstellungsverfahrens oder erst am späteren Verwendungsort dadurch vervollständigt werden, dass der Transponder an der dafür vorgesehenen Stelle befestigt wird. Dabei kann das Substrat sehr dünn und transparent ausgebildet sein, so dass der an der Fahrzeugscheibe befindliche Transponder wenig auffällt. Das Substrat ist vorteilhafterweise plattförmig ausgebildet und weist eine konstante Materialstärke (Dicke) auf.

Gemäß einer bevorzugten Weiterbildung der Erfindung ist der Reflektor als eine transparente, elektrisch leitfähige Beschichtung ausgebildet, die einen für elektromagnetische Strahlung im Frequenzbereich der Antenne durchlässigen Bereich aufweist. Diese Weiterbildung beruht auf der Erkenntnis, dass viele Fahrzeugscheiben transparente, elektrisch leitfähige Beschichtungen aufweisen. Diese transparenten, elektrisch leitfähigen Beschichtungen haben vielfältige Funktionalität. Zum Beispiel können sie als Heizvorrichtung dienen, um die Fahrzeugscheibe von Feuchtigkeit und Eis zu befreien, oder sind zur Reflexion von Wärmestrahlung vorgesehen.

Die transparente, elektrisch leitfähige Beschichtung ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und damit im Bereich der Sonneneinstrahlung auf. Dadurch wird ein Aufheizen des Innenraums eines Fahrzeugs oder Gebäudes infolge von Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Besonders geeignete transparente, elektrisch leitfähige Beschichtungen enthalten mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO₂:F), Antimon-dotiertes Zinnoxid (ATO, SnO₂:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon

Die Dicke der transparenten, elektrisch leitfähigen Beschichtung kann breit variieren und den Erfordernissen des Einzelfalls angepasst werden. Die transparente, elektrisch leitfähige Beschichtung weist bevorzugt eine Schichtdicke von 10 nm bis 5 µm und besonders bevorzugt von 30 nm bis 1 µm auf.

Der Flächenwiderstand der transparenten, elektrisch leitfähigen Beschichtung beträgt bevorzugt von 0,35 Ohm/Quadrat bis 200 Ohm/Quadrat, bevorzugt 0,5 Ohm/Quadrat bis 200 Ohm/Quadrat, ganz besonders bevorzugt von 0,6 Ohm/Quadrat bis 30 Ohm/Quadrat, und insbesondere von 2 Ohm/Quadrat bis 20 Ohm/Quadrat. Die transparente, elektrisch leitfähige Beschichtung kann prinzipiell noch niedrigere Flächenwiderstände als 0,35 Ohm/Quadrat aufweisen, insbesondere, wenn bei deren Verwendung nur eine geringe Lichttransmission benötigt wird. Die transparente, elektrisch leitfähige Beschichtung weist bevorzugt gute infrarotreflektierende Eigenschaften und/oder besonders niedrige Emissivitäten (Low-E) auf.

Den transparenten, elektrisch leitfähigen Beschichtungen ist gemeinsam, dass sie auch undurchlässig für elektromagnetische Strahlung im Hochfrequenzbereich sind. Durch eine allseitige und vollflächige Verglasung eines Fahrzeugs mit transparenten, elektrisch leitfähigen Beschichtungen ist das Senden und Empfangen von elektromagnetischer Strahlung im Innenraum kaum möglich. Für den Betrieb von Sensoren wie Regensensoren, Kamerasystemen oder ortsfesten Antennen werden üblicherweise ein oder zwei örtlich begrenzte Bereiche der elektrisch leitfähigen, transparenten Beschichtung entschichtet. Diese entschichteten Bereiche bilden ein sogenanntes Kommunikationsfenster oder Datenübertragungsfenster. Derartige Kommunikationsfenster werden an unauffälligen Positionen der Scheibe angeordnet, beispielsweise im Bereich des Innenspiegels einer Windschutzscheibe, und durch Schwarzdrucke und Kunststoffblenden abgedeckt.

Die transparente, elektrisch leitfähige Beschichtung ist zur Verwendung als Reflektor geeignet ausgebildet und kann sich zumindest über einen Teil einer Oberfläche der Glasscheibe erstrecken oder in einer dazu parallel verlaufenden Zwischenschicht integriert sein.

Der Transponder oder die Fläche der orthogonalen Projektion des Transponders sind in dem für elektromagnetische Strahlung im Frequenzbereich der Antenne durchlässigen Bereich der transparenten, elektrisch leitfähigen Beschichtung, insbesondere einem Kommunikationsfenster, angeordnet. Mit anderen Worten überlappt der für elektromagnetische Strahlung im Frequenzbereich der Antenne durchlässige Bereich der transparenten, elektrisch leitfähigen Beschichtung den Transponder in einer senkrechten Ausrichtung in Bezug auf die erste Glasscheibe.

Der für elektromagnetische Strahlung durchlässige Bereich besteht, je nach Frequenz, nur aus einem Umkreis von wenigen Zentimetern um den Transponder. In dieser vorteilhaften Weiterbildung entfällt ein zusätzlicher Produktionsschritt, da eine bereits vorhandene transparente, elektrisch leitfähige Beschichtung als Reflektor verwendet werden kann.

Der für elektromagnetische Strahlung im Frequenzbereich der Antenne durchlässige Bereich kann als ein beschichtungsfreier Bereich ausgebildet sein. Der Transponder ist durch den beschichtungsfreien Bereich von der übrigen transparenten, elektrisch leitfähigen Beschichtung elektrisch für Gleichströme isoliert. Der beschichtungsfreie Bereich ist ein Bereich, in dem die transparent, elektrisch leitfähige Beschichtung entfernt wurde, beispielsweise durch Laserabtragung oder abrasive Prozesse. Dies ist industriell besonders einfach und kostengünstig durchzuführen.

Alternativ kann der für elektromagnetische Strahlung im Frequenzbereich der Antenne durchlässige Bereich durch Laserschnitte ausgeführt sein, wobei die Beschichtung in den Bereich nicht vollflächig ausgebildet ist, sondern ein Rechteckraster, ein Rautenraster oder ein Raster mit beliebigen Formen aufweist. Das Raster besteht aus mehreren Flächenelementen, die voneinander isoliert sind und jeweils eine gegenüber der Wellenlänge kleine Ausdehnung bzw. Kantenlänge von weniger als ein Zehntel der Wellenlänge aufweisen. Die maximale Ausdehnung, insbesondere Kantenlänge, kann beispielsweise von 1 mm bis 0.1 mm aufweisen.

Falls die transparente, elektrisch leitfähige Beschichtung und der Transponder in einer Ebene angeordnet sind, z.B. ist der Transponder auf der Scheibenoberfläche angeordnet, auf der sich auch die transparente, elektrisch leitfähige Beschichtung erstreckt, dann kann die transparente, elektrisch leitfähige Beschichtung den Transponder umschließen.

In einer weiteren zweckmäßigen Weiterbildung der Erfindung kann der Reflektor einen Linienleiter umfassen. Der Linienleiter kann als eine gedruckte, elektrisch leitfähige Paste, bevorzugt eine silberhaltige Siebdruckpaste oder als ein elektrisch leitfähiger Leiter, bevorzugt aus Metall und insbesondere aus Kupfer, Silber, Gold oder Aluminium ausgebildet sein. Kupfer hat sich für solche Leiter bewährt, da es eine gute elektrische Leitfähigkeit besitzt. Gleichzeitig sind die Materialkosten bei Kupfer niedrig.

Der Linienleiter dient als Reflektor zum Reflektieren von elektromagnetischen Wellen und ist zu diesem Zweck geeignet ausgebildet, d.h. er verfügt über eine zur Reflexion im gewünschten Frequenzbereich geeignete Länge. Der Linienleiter kann auch beispielsweise in Drahtform oder Flachleiter ausgebildet sein. Ein Linienleiter als Reflektor ist handhabungsstabil und stabil bei der Lagerung an der Fahrzeugscheibe befestigt.

Gemäß einer vorteilhaften Weiterbildung der Erfindung umfasst der Reflektor zwei Linienleiter, die jeweils im gleichen Abstand vom Transponder angeordnet sind. Damit ist ein Transponder mit einer Reflektor Anordnung möglich, die besonders einfach herstellbar ist.

Gemäß einer weiteren vorteilhaften Weiterbildung der Erfindung kann der Reflektor als ein metallischer, geschlossener Ring ausgebildet sein. Dies hat den Vorteil, dass die Reflexion je nach Transpondertyp zusätzlich verstärkt werden kann.

Nach einer vorteilhaften Weiterbildung der Erfindung arbeitet der Transponder energieautark.

Gemäß einer weiteren vorteilhaften Weiterbildung der Erfindung ist der Transponder ein RFID-Transponder. Insbesondere weisen UHF RFID-Transponder einen Halbleiter-Chip auf, der sich durch seine gegenüber der Antenne kleinen Abmessungen auszeichnet.

In einer weiteren Ausgestaltung der Erfindung arbeitet der Transponder in einem Frequenzbereich von 800 MHz bis 3GHz, bevorzugt bis 2,45 GHz, besonders bevorzugt von 860 MHz bis 930 MHz. Die Abmessungen der Antenne sind im Allgemeinen von dem gewünschten Frequenzband und der jeweiligen Verwendung abhängig.

Ferner wird vorgeschlagen, dass die Identifikationsdaten zur Kennzeichnung eines Fahrzeugs vorgesehen sind. Dadurch kann vorteilhaft eine Zuordnung eines Transponders zu einem Fahrzeug erzielt werden.

Gemäß einer weiteren vorteilhaften Weiterbildung der Erfindung ist die erste Glasscheibe über eine thermoplastische Zwischenschicht mit einer zweiten Glasscheibe verbunden. Als Glasscheibe sind im Grunde alle elektrisch isolierenden Substrate geeignet, die unter den Bedingungen der Herstellung und der Verwendung der erfindungsgemäßen Fahrzeugscheibe thermisch und chemisch stabil sowie dimensionsstabil sind. Der Transponder ist vorzugsweise auf einer innenseitigen Oberfläche der ersten Glasscheibe befestigt.

Alternativ kann der Transponder und/oder der Reflektor zwischen der ersten und der zweiten Glasscheibe in der Zwischenschicht angeordnet sein.

Bei einer weiteren vorteilhaften Ausgestaltung der erfindungsgemäßen Fahrzeugscheibe befindet sich die transparente, elektrisch leitfähige Beschichtung auf mindestens einer der Oberflächen, insbesondere einer innenliegenden Oberfläche, der ersten und/oder zweiten Glasscheibe. Alternativ kann die transparente, elektrisch leitfähige Beschichtung in der Zwischenschicht integriert sein. Die transparente, elektrisch leitfähige Beschichtung ist dann bevorzugt auf eine Trägerfolie aufgebracht. Die Trägerfolie enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die erste und/oder zweite Glasscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste und/oder die zweite Glasscheibe sind bevorzugt transparent, insbesondere für die Verwendung in einem Fahrzeug, beispielsweise als Windschutzscheibe oder Rückscheibe, oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Fahrzeugscheiben, die nicht im verkehrsrelevanten Sichtfeld des Fahrers liegen, beispielsweise für Dachscheiben, kann die Transmission aber auch viel geringer sein, beispielsweise größer als oder gleich 5 %.

Bei einer Fahrzeugscheibe werden die erste Glasscheibe und die zweite Glasscheibe durch mindestens eine Zwischenschicht miteinander verbunden. Die Zwischenschicht ist bevorzugt transparent. Die Zwischenschicht enthält vorzugsweise mindestens einen Kunststoff, bevorzugt Polyvinylbutyral (PVB), Ethylenvinylacetat (EVA) und/oder Polyethylenterephthalat (PET). Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander oder nebeneinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die erste Glasscheibe und die zweite Glascheibe und eventuelle weitere Zwischenschichten miteinander verkleben.

Das Laminieren, also das Verbinden von erster Glasscheibe und zweiter Glasscheibe über die Zwischenschicht, erfolgt bevorzugt unter Einwirkung von Hitze, Vakuum und/oder Druck. Es können an sich bekannte Verfahren zur Herstellung einer Verbundscheibe verwendet werden.

In einer weiteren zweckmäßigen Weiterbildung verfügt die Fahrzeugscheibe zusätzlich über einen umlaufenden rahmenförmigen entschichteten Bereich mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der umlaufende rahmenförmige entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich kann die transparente, elektrisch leitfähige Beschichtung in einem weiteren Bereich entschichtet sein, der beispielsweise als Datenübertragungsfenster oder Kommunikationsfenster dient. Die transparente Scheibe ist in dem weiteren entschichteten Bereich für elektromagnetische und insbesondere infrarote Strahlung durchlässig.

Die erfindungsgemäße Fahrzeugscheibe ist zur Abtrennung eines Fahrzeuginnenraums von einer äußeren Umgebung geeignet. In der äußeren Umgebung (kurz Außenraum) befindet sich das Lesegerät des Transponders, das Signale des Transponders empfangen kann.

Die Dicke der ersten und/oder zweiten Glasscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas verwendet. Die Größe der ersten Glasscheibe und/oder der zweiten Glasscheibe kann breit variieren und richtet sich nach der Größe der erfindungsgemäßen Verwendung. Die erste Glasscheibe und/oder die zweite Glasscheibe weisen beispielsweise im Fahrzeugbau übliche Flächen von 200 cm² bis zu 3 m² auf.

Die Fahrzeugscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die erste Glasscheibe und die zweite Glasscheibe plan oder leicht oder stark in einer Richtung oder in mehreren Richtungen des Raumes gebogen. Insbesondere werden plane Scheiben verwendet. Die Scheiben können farblos oder gefärbt sein.

Zusätzlich kann die Fahrzeugscheibe über ein Leitersystem mit Heizfunktion verfügen, welches zwischen stromführenden Sammelschienen angeordnete elektrische und als Heizleiter dienende Widerstandselemente umfasst. Die Heizleiter bestehen aus vertikal, im wesentlich parallel zueinander verlaufenden Widerstandsdrähten, die einen Durchmesse von etwa 20 µm bis 200µm, bevorzugt 0.09 mm (90 µm) aufweisen. Sie sind vorzugsweise in einem gegenseitigen Abstand von etwa 1 mm bis 5 mm wellenförmig verlegt und verlaufen im Wesentlichen senkrecht zur Antenne des Transponders.

Die erfindungsgemäße Fahrzeugscheibe eignet sich für alle Fahrzeuge, z.B. Kraftfahrzeuge, Züge, Schiffs- oder Luftfahrzeuge, wobei Kraftfahrzeuge besonders bevorzugt sind. Beispiele für geeignete Kraftfahrzeuge sind Busse, Traktoren, Lastkraftwagen und Personenkraftwagen, wobei Personenkraftwagen besonders bevorzugt sind.

In einer bevorzugten Ausführungsform ist die Fahrzeugscheibe eine Windschutzscheibe, Dachscheibe, eine Heckscheibe, eine hintere Seitenscheibe oder eine vordere Seitenscheibe, vorzugsweise in einem Kraftfahrzeug.

Die erfindungsgemäße Kombination der beschriebenen technischen Merkmale führt zu einer Fahrzeugscheibe, bei welcher der Antennengewinn des Transponders optimiert ist.

Ein weiterer Aspekt der Erfindung umfasst ein Verfahren zur Herstellung einer Fahrzeugscheibe, wobei zumindest:
der Transponder mit der Antenne und der Steuereinheit zur Kommunikation mit einem Lesegerät auf eine Oberfläche der ersten Glasscheibe, einer Oberfläche einer zweiten Glasscheibe oder zwischen der ersten und der zweiten Glasscheibe befestigt wird, wobei die Steuereinheit einen Speicher zum Speichern von Identifikationsdaten aufweist, und der zum Transponder zugeordneter, beabstandeter Reflektor zum Erhöhen eines Antennengewinns der Antenne auf eine Oberfläche der ersten Glasscheibe, einer Oberfläche der zweiten Glasscheibe oder zwischen der ersten und der zweiten Glasscheibe aufgebracht wird.

In einer vorteilhaften Ausführungsform des erfindungsgemäßen Verfahrens ist der Transponder auf einem Substrat angeordnet, wobei das Substrat durch Verkleben mit einem Klebstoff mit der Oberfläche der Glasscheibe verbunden wird.

Die Erfindung umfasst außerdem die Verwendung der erfindungsgemäßen Fahrzeugscheibe in Fortbewegungsmitteln für den Verkehr auf dem Lande, in der Luft oder zu Wasser, insbesondere in Kraftfahrzeugen beispielsweise als Windschutzscheibe, Seitenscheibe, Heckscheibe, und/oder Dachscheibe.

Die Erfindung betrifft auch ein Fahrzeug, umfassend mindestens eine erfindungsgemäße Fahrzeugscheibe, wobei das Fahrzeug bevorzugt ein Kraftfahrzeug ist.

Die Erfindung wird nachfolgend anhand von nicht einschränkenden Ausführungsbeispielen unter Bezug auf die beigefügten Zeichnungen weiter erläutert.

Die Erfindung wird im Folgenden und in den beigefügten Figuren erläutert. Die Zeichnung ist nicht vollständig maßstabsgetreu. Die Erfindung wird durch die Zeichnung in keiner Weise eingeschränkt. In diesen zeigt:

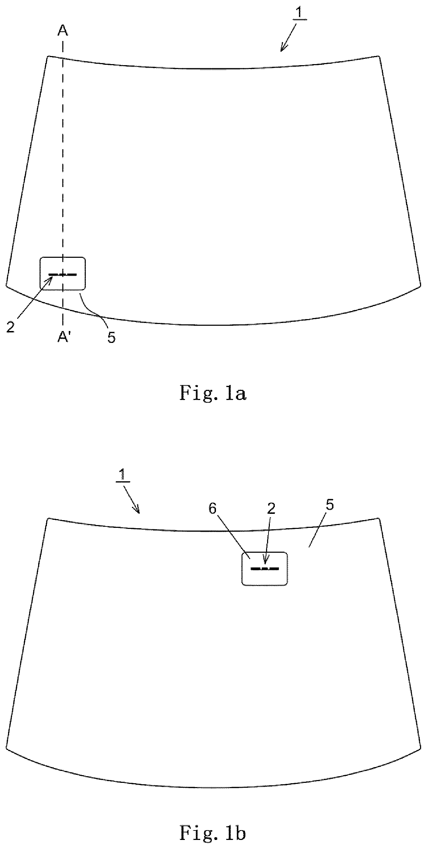

- Fig. 1a: eine Draufsicht auf eine erfindungsgemäße Fahrzeugscheibe mit einem Transponder;
- Fig. 1: b eine Draufsicht auf eine alternative erfindungsgemäße Fahrzeugscheibe mit einem Transponder;
- Fig. 2: eine vergrößerte Darstellung eines Ausschnitts aus Fig. 1 mit Transponder;
- Fig. 3: ein Querschnitt entlang der Schnittlinie A-A' aus Fig. 2;
- Fig. 4: ein Ausgestaltungsbeispiel einer erfindungsgemäßen Fahrzeugscheibe mit Transponder,
- Fig. 5: einer Querschnittdarstellung der Fahrzeugscheibe aus Fig. 4,
- Fig. 6a: ein weiteres Ausgestaltungsbeispiel einer erfindungsgemäßen Fahrzeugscheibe mit Transponder,
- Fig. 6b: eine Draufsicht auf eine weitere erfindungsgemäße Fahrzeugscheibe mit einem Transponder,
- Fig. 7: ein beispielhaftes Leistungsdiagramm eines vom erfindungsgemäßen Transponder empfangenen Signals und
- Fig. 8: ein weiteres beispielhaftes Leistungsdiagramm eines vom erfindungsgemäßen Transponder empfangenen Signals.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt.

Weiterhin wird nachfolgend der Einfachheit halber in aller Regel immer nur auf eine Entität Bezug genommen. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Angaben mit Zahlenwerten sind in aller Regel nicht als exakte Werte zu verstehen, sondern beinhalten auch eine Toleranz von +/- 1 % bis zu +/- 10 %.

Figur 1a zeigt eine Draufsicht auf eine erfindungsgemäße Fahrzeugscheibe 1. Die Fahrzeugscheibe 1 ist in diesem Beispiel als Windschutzscheibe eines Personenkraftwagens ausgebildet und mit einem Transponder 2 ausgestattet. Die Abmessungen der Fahrzeugscheibe 1 betragen beispielsweise 0,9 m x 1,5 m. Der Transponder 2 ist im unteren, seitlichen Bereich der Fahrzeugscheibe 1 angeordnet. Alternativ kann der Transponder 2 an anderen Stellen der Fahrzeugscheibe 1 angeordnet sein, beispielsweise im oberen, mittigen Bereich der Fahrzeugscheibe 1. Dabei ist es wichtig eine geeignete Position mit guter Verbindung zum Lesegerät zu finden.

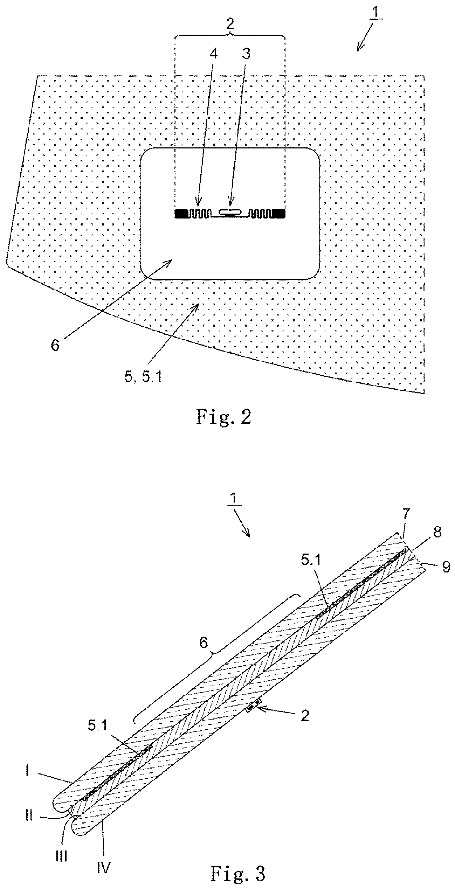

Der Transponder 2 ist ein sogenannter UHF-RFID Transponder (Datenträger bei einer Funkfrequenz-Identifizierung) mit einer Antenne 4 und einer Steuereinheit 3 mit einem Speicher zum Speichern von Identifikationsdaten und zur Kommunikation mit einem externen Lesegerät (siehe Figur 2). Dieser Transponder 2 sendet ein individualisierendes Signal, wenn er einem entsprechenden elektromagnetischen Wechselfeld ausgesetzt wird. D.h. das elektromagnetische Wechselfeld muss mit einem Abfragesignal moduliert sein. Zum Auslesen des Transponders 2 wird durch ein externes Lesegerät das auf den Transponder 2 abgestimmte elektromagnetische Wechselfeld erzeugt. Derartige Transponder arbeiten im Frequenzbereich von 860 MHz bis 930 MHz, den sogenannten Ultra High Frequenzen (UHF). Entsprechend ist die Größe der Antenne 4 auf diese Frequenzen abgestimmt.

Der Transponder 2 kann als aktiver oder passiver Transponder ausgebildet sein. Der als aktiver ausgebildeter Transponder 2 kann die Energie für das vom Transponder ausgesendete Signal von einer den Transponder 2 zugeordneten separaten Energiequelle empfangen. Der passive Transponder 2 bezieht die Energie für das Aussenden individualisierende Signale aus der Energie des durch das Lesegerät erzeugten elektromagnetischen Wechselfeldes. Nachdem der Transponder 2 das Signal gesendet hat, wird das Signal von dem externen und sich in Reichweite des Signals vorhandenen Lesegerät empfangen.

Figur 1b zeigt eine Draufsicht auf eine alternative Ausgestaltung der Fahrzeugscheibe 1 aus Figur 1. Im Unterschied zur Figur 1 ist der Transponder 2 im oberen Bereich der Fahrzeugscheibe 1 angeordnet. Diese Anordnung ist besonders vorteilhaft, wenn sich der Transponder 2 in Reichweite eines durch ein Lesegerät erzeugten Wechselfeldes befindet und das Lesegerät über dem Fahrzeug angeordnet ist.

Figur 2 zeigt eine vergrößerte Darstellung eines Ausschnitts der erfindungsgemäßen Fahrzeugscheibe 1 aus Figur 1. Die Fahrzeugscheibe 1 umfasst den Transponder 2 und hier beispielsweise eine transparente, elektrisch leitfähige Beschichtung 5.1 als Reflektor 5 zum Erhöhen des Antennengewinns. Die transparente, elektrisch leitfähige Beschichtung 5.1 weist einen beschichtungsfreien Bereich 6 auf. Der beschichtungsfreie Bereich 6 weist eine rechteckige Form mit einer Länge von 130 mm und einer Breite von 110 mm auf. Der beschichtungsfreie Bereich 6 der transparenten, elektrisch leitfähigen Beschichtung 5.1 überlappt den Transponder 2 in einer senkrechten Ausrichtung in Bezug auf die Fahrzeugscheibe 1. Der Transponder 2 ist im Wesentlichen mittig im beschichtungsfreien Bereich 6 angeordnet. Dadurch wird die Abstrahlung über die transparente, elektrische leitfähige Beschichtung 5.2 reflektiert. Die Bündelung der Abstrahlung führt zu einem verstärkten Antennensignal.

Die Länge und Breite des beschichtungsfreien Bereichs 6 sind auf den Frequenzbereich der Antenne 4 abgestimmt. Bei der Antenne 4 kann es sich um eine flächig ausgeführte Antenne handeln, die eine symmetrische, mäanderförmige Struktur aufweist.

Alternativ kann der für elektromagnetische Strahlung im Frequenzbereich der Antenne durchlässige Bereich 6 durch Laserschnitte ausgeführt sein. Die transparente, elektrisch leitfähige Beschichtung 5.1 ist dann im Bereich 6 nicht vollflächig entfernt, sondern weist ein Rechteckraster auf. Das Rechteckraster besteht aus mehreren Rechteckelementen, die voneinander isoliert sind und jeweils eine Kantenlänge von weniger als ein Zehntel der Wellenlänge der elektromagnetischen Strahlung aufweisen. Die Kantenlänge kann beispielsweise von 1 mm bis 0.5 mm betragen, wobei die Rechtecke eine Breite von 0.1 mm aufweisen.

Figur 3 zeigt schematisch eine erfindungsgemäße Fahrzeugscheibe im Querschnitt mit einer ersten, äußeren Glasscheibe 7, einer Zwischenschicht 8, und einer zweiten, inneren Glasscheibe 9. Die Zwischenschicht 8 ist eine PVB-Folie. Zusätzlich können weitere Zwischenschichten zwischen der ersten Glasscheibe 7 und zweiten Glasscheibe 9 angeordnet sein. Die Zwischenschichten können Polyvinylbutyral, Ethylenvinylacetat, Polyurethan und/oder Gemische und/oder Copolymere davon und eine Polymerfolie aufweisen. Bevorzugt wird eine Schicht Polyvinylbutyral (PVB) mit einer Polyethylenterephthalat-Folie (PET) verwendet. Derartige Zwischenschichten können infrarotreflektierende Eigenschaften aufweisen.

Die zweite, innere Glasscheibe 9 ist beispielsweise dafür vorgesehen, in Einbaulage dem Innenraum eines Fahrzeugs zugewandt zu sein. Das heißt, sie weist eine innenseitige Oberfläche IV auf, die vom Innenraum aus zugänglich ist, wogegen die außenseitige Oberfläche I der ersten, äußeren Glasscheibe 7 bezüglich des Fahrzeuginnenraums nach außen weist. Erste, äußere Glasscheibe 7 und zweite, innere Glasscheibe 9 bestehen beispielsweise aus Natron-Kalkglas. Die Dicke der zweiten, inneren Glasscheibe 9 beträgt beispielsweise 1,6 mm und die Dicke der ersten, äußeren Glasscheibe 7 beträgt 2,1 mm. Es versteht sich, dass die erste, innere Glasscheibe 7 und die zweite, äußere Glasscheibe 9 beispielsweise auch gleich dick ausgebildet sein können. Die Zwischenschicht 8 weist eine Dicke von 0,76 mm auf.

Der Transponder 2 ist auf der innenseitigen Oberfläche IV der zweiten, inneren Glasscheibe 9 angeordnet. Der Transponder 2 befindet sich in einem Bereich der Fahrzeugscheibe 1, in dem auf der innenseitigen Oberfläche II der ersten, äußeren Glasscheibe 7 ein beschichtungsfreier Bereich 6 angeordnet ist. Somit liegt der beschichtungsfreie Bereich 6 gegenüber dem Transponder 2. Der beschichtungsfreie Bereich 6 ist durchlässig für elektromagnetische Strahlung im Frequenzbereich der Antenne 4, so dass das durch die Antenne 4 abgegebene Signal vom Fahrzeuginnenraum in Richtung Fahrzeugaußenraum die zweite, innere Glasscheibe 9 und den beschichtungsfreien Bereich 6 durchdringt.

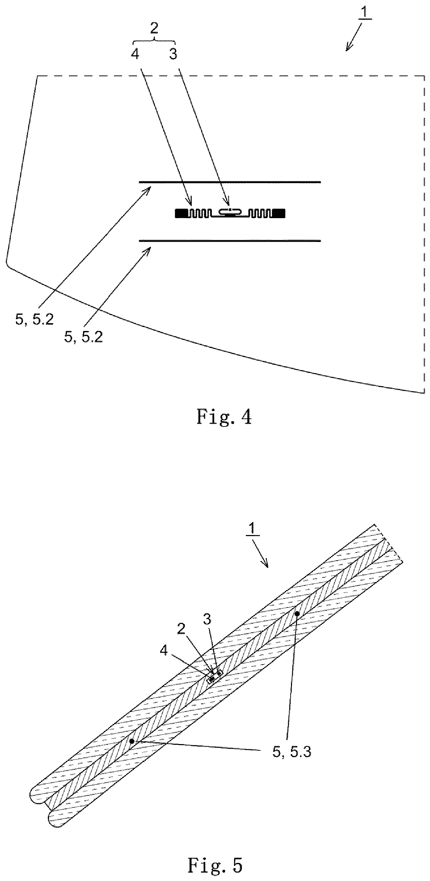

In Figur 4 ist ein alternatives Ausgestaltungsbeispiel einer erfindungsgemäßen Fahrzeugscheibe 1 aus Figur 2 dargestellt. Der Transponder 2 ist in der Zwischenschicht 8 der Fahrzeugscheibe 1 angeordnet. Im Unterschied zur Figur 2 ist der dem Transponder 2 zugeordnete Reflektor 5 als eine Anordnung von zwei Linienleitern 5.2 ausgebildet. Der Transponder 2 ist zwischen den zwei Linienleitern 5. 2 in der Zwischenschicht 8 integriert. Die Linienleiter 5.2 sind jeweils mit gleichem Abstand zum Transponder 2 angeordnet, so dass der Transponder 2 mittig zwischen den zwei Linienleitern 5.2. liegt. Diese Linienleiter 5.2 sind elektrische Leiter aus Metalldrähten. Die Länge eines Linienleiters 5.2 wird durch die verwendete Frequenz des Wechselfeldes bestimmt und beträgt ca. eine halbe Wellenlänge verkürz um das Medium (Lambda/2*n). Bei einer Arbeitsfrequenz des Transponders von 860 MHz weisen die Linienleiter 5.2 jeweils eine Länge von 16 cm auf.

Alternativ oder zusätzlich kann der Transponder 2 und/oder Linienleiter 5.2 auf der innenseitigen Oberfläche IV der zweiten, inneren Glasscheibe 9 angeordnet sein. Die Linienleiter 5.2 bestehen dann aus einer silberhaltigen Siebdruckpasten, die durch Einbrennen oder Druck auf die Fahrzeugscheibe aufgebracht wird. Die Schichtdicke der eingebrannten Silberpaste beträgt bevorzugt von 5 µm bis 20 µm.

Fig. 5 zeigt eine Querschnittdarstellung der Fahrzeugscheibe aus Fig. 4. Im Unterschied zur Figur 2 ist der Transponder 2 und der dem Transponder 2 zugeordnete Reflektor 5 zwischen der ersten, äußeren Glasscheibe 7 und der zweiten, inneren Glasscheibe 9 angeordnet. Der Reflektor 5 besteht aus zwei Linienleitern 5.2, die im gleichen Abstand zur Transponder 2 angeordnet sind.

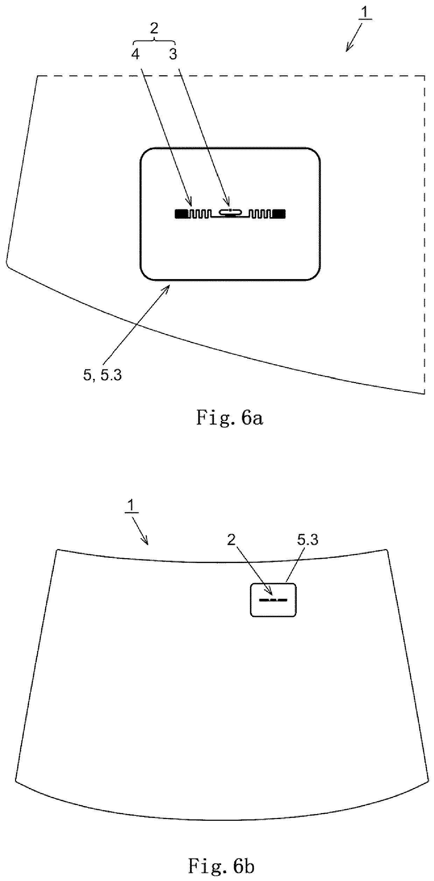

In Figur 6a ist ein alternatives Ausgestaltungsbeispiel einer erfindungsgemäßen Fahrzeugscheibe 1 aus Figur 4 dargestellt. Im Unterschied zur Figur 4 ist der Transponder 2 und der Reflektor 5 auf der innenseitigen Oberfläche IV der zweiten, inneren Glasscheibe 9 angeordnet. Der Reflektor 5 ist als ein metallischer, geschlossener, Ring 5.3 ausgebildet. Der metallische, geschlossene Ring ist ein elektrischer Leiter aus silberhaltiger Siebdruckpaste, der durch Einbrennen oder Druck auf die Fahrzeugscheibe 1 aufgebracht wird.

Figur 6b zeigt eine Draufsicht auf eine alternative Ausgestaltung der Fahrzeugscheibe 1 aus Figur 6. Im Unterschied zur Figur 6 ist der Transponder 2 und der Reflektor 5.3 im oberen Bereich der Fahrzeugscheibe 1 angeordnet.

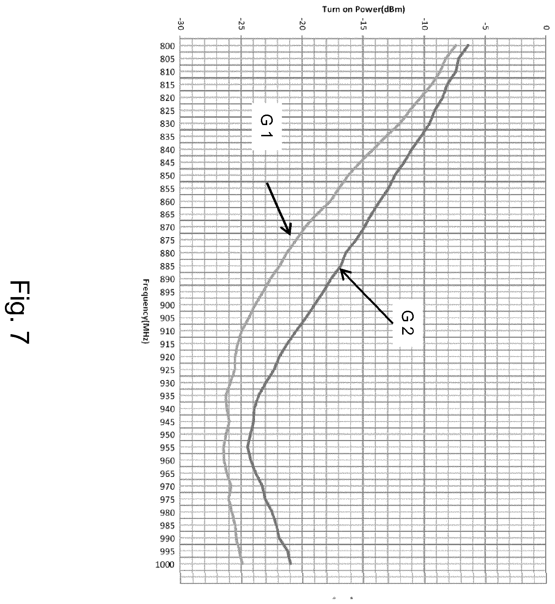

Fig. 7 zeigt ein beispielhaftes Leistungsdiagramm eines Transponders 2 gemäß Figur 2. Vom externen Lesegerät wurde ein Signal, ein sogenanntes Vorwärtssignal, versandt und vom Transponder 2 mit einem beanstandeten, zugeordneten Reflektor 5.1 empfangen. Die Signalleistung wurde am Transponder 2 erfasst und als Graph G1 dargestellt. Als Graph G2 ist eine Referenzleistung gemessen worden, wobei ein Transponder ohne einen Reflektor verwendet wurde. Deutlich zu erkennen ist, dass der Transponder 2 mit Reflektor eine geringere Signalleistung benötigt um das Vorwärtssignal zu empfangen. Dadurch wird der Antennengewinn gesteigert.

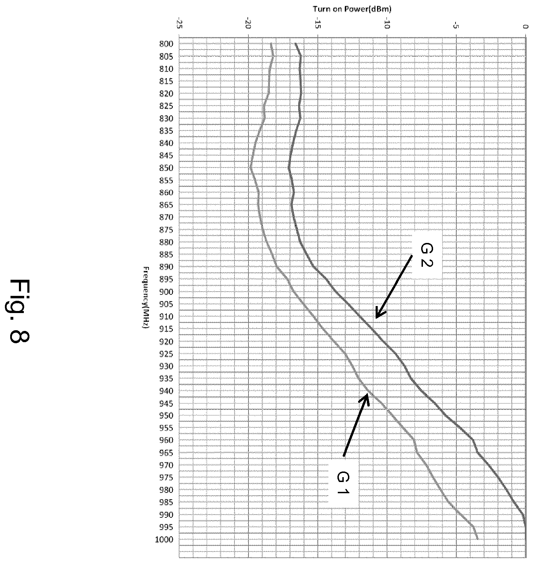

Fig. 8 zeigt ein beispielhaftes Leistungsdiagramm eines Transponders 2 gemäß Figur 4. Vom externen Lesegerät wurde ein Signal, ein sogenanntes Vorwärtssignal, versandt und vom Transponder 2 mit einem beanstandeten, zugeordneten Reflektor 5.2 empfangen. Die Signalleistung wurde am Transponder 2 erfasst und als Graph G1 dargestellt. Als Graph G2 ist eine Referenzleistung gemessen worden, wobei ein Transponder ohne einen Reflektor verwendet wurde. Deutlich zu erkennen ist auch hier, dass der Transponder 2 mit Reflektor eine geringere Signalleistung benötigt um das Vorwärtssignal zu empfangen. Dadurch wird der Antennengewinn gesteigert.

Die Erfindung stellt eine Fahrzeugscheibe 1 zur Verfügung, bei der das Signal des Transponders 2 in einer senkrechten Richtung zur Oberfläche der Fahrzeugscheibe verstärkt wird. In einer vorteilhaften Ausgestaltung der Erfindung wird durch eine entsprechende Ausgestaltung der transparenten, elektrisch leitfähigen Beschichtung 5.1 als Reflektor 5 mit dem beschichtungsfreien Bereich 6 und eine beabstandete Anordnung des Transponders 2 mit Antenne 4 ein erhöhter Antennengewinn der Antenne 4 erzielt. Dies war für den Fachmann unerwartet und überraschend.

### Bezugszeichenliste:

- 1: Fahrzeugscheibe
- 2: Transponder
- 3: Steuereinheit
- 4: Antenne
- 5: Reflektor
- 5.1: transparent, elektrische Beschichtung
- 5.2: Linienleiter
- 5.3: Ring
- 6: für elektromagnetische Strahlung im Frequenzbereich der Antenne durchlässiger Bereich
- 7: erste, äußere Glasscheibe
- 8: Zwischenschicht
- 9: zweite, innere Glasscheibe

- I: außenseitige Oberfläche der ersten, äußeren Glasscheibe 7
- II: innenseitige Oberfläche der ersten, äußeren Glasscheibe 7
- III: außenseitige Oberfläche der zweiten, innere Glasscheibe 9
- IV: innenseitige Oberfläche der zweiten, innere Glasscheibe 9

## Patentansprüche

1. Fahrzeugscheibe (1), umfassend
a) eine erste Glasscheibe (7),
b) einen Transponder (2) mit einer Antenne (4) und einer Steuereinheit (3) zur Kommunikation mit einem Lesegerät, wobei die Steuereinheit (3) einen Speicher zum Speichern von Identifikationsdaten umfasst,
**gekennzeichnet durch** einen zum Transponder (2) zugeordneten, beabstandeten Reflektor (5) zum Erhöhen eines Antennengewinns der Antenne (4), wobei der Reflektor (5) als eine transparente, elektrisch leitfähige Beschichtung (5.1) und/oder als ein metallischer Ring (5.3) ausgebildet ist.

2. Fahrzeugscheibe (1) nach Anspruch 1, wobei die transparente, elektrisch leitfähige Beschichtung (5.1) einen für elektromagnetische Strahlung im Frequenzbereich der Antenne (4) durchlässigen Bereich (6) aufweist.

3. Fahrzeugscheibe (1) nach Anspruch 2, wobei der Transponder (2) oder die Fläche der orthogonalen Projektion des Transponders (2) in einem für elektromagnetische Strahlung im Frequenzbereich der Antenne (4) durchlässigen Bereich (6) angeordnet ist.

4. Fahrzeugscheibe (1) nach einem der Ansprüche 1 bis 3, wobei der Reflektor (2) mindestens einen Linienleiter (5.2) aufweist.

5. Fahrzeugscheibe (1) nach einem der Ansprüche 1 bis 4, wobei der Reflektor (5) zwei Linienleiter (5.2) aufweist, die jeweils im gleichen Abstand vom Transponder (2) angeordnet sind.

6. Fahrzeugscheibe (1) nach einem der Ansprüche 1 bis 5, wobei der metallische Ring (5.3) als ein geschlossener Ring (5.3) ausgebildet ist.

7. Fahrzeugscheibe (1) nach einem der Ansprüche 1 bis 6, wobei der Transponder (2) energieautark arbeitet.

8. Fahrzeugscheibe (1) nach einem der Ansprüche 1 bis 7, wobei der Transponder (2) ein RFID-Transponder ist.

9. Fahrzeugscheibe (1) nach einem der Ansprüche 1 bis 8, wobei der Transponder (2) in einen Frequenzbereich von 800MHz bis 3GHz arbeitet.

10. Fahrzeugscheibe (1) nach einem der Ansprüche 1 bis 9, wobei die Identifikationsdaten zur Kennzeichnung eines Fahrzeugs vorgesehen sind.

11. Fahrzeugscheibe (1) nach einem der Ansprüche 1 bis 10, wobei die erste Glasscheibe (7) über eine thermoplastische Zwischenschicht (8) mit einer zweiten Glasscheibe (9) verbunden ist.

12. Fahrzeugscheibe (1) nach einem der vorherigen Ansprüche, wobei die Fahrzeugscheibe eine Kraftfahrzeugscheibe ist.

13. Fahrzeug, umfassend eine Fahrzeugscheibe (1) nach einem der Ansprüche 1 bis 12, wobei das Fahrzeug ein Kraftfahrzeug ist.

14. Verfahren zur Herstellung einer Fahrzeugscheibe (1) nach einem der Ansprüche 1 bis 12, wobei zumindest:
a) der Transponder (2) mit der Steuereinheit (3) zur Kommunikation mit einem Lesegerät auf einer Oberfläche der ersten Glasscheibe (7), einer Oberfläche einer zweiten Glasscheibe (8) oder zwischen der ersten und der zweiten Glasscheibe (7, 8) befestigt wird, wobei die Steuereinheit (3) einen Speicher zum Speichern von Identifikationsdaten und die Antenne (4) aufweist, und
b) der zum Transponder (2) zugeordnete, beabstandete Reflektor (5) zum Erhöhen eines Antennengewinns der Antenne (4) auf eine Oberfläche der ersten Glasscheibe (7), einer Oberfläche der zweiten Glasscheibe (8) oder zwischen der ersten und der zweiten Glasscheibe (7, 8) angeordnet wird.

15. Verwendung der Fahrzeugscheibe nach einem der Ansprüche 1 bis 12 in Fortbewegungsmitteln für den Verkehr auf dem Lande, in der Luft oder zu Wasser als Windschutzscheibe, Heckscheibe, und/oder Dachscheibe.

## Claims

1. A vehicle window (1), comprising
a) a first glass pane (7),
b) a transponder (2) having an antenna (4) and a control unit (3) for communicating with a reader, the control unit (3) comprising a memory for storing identification data,
**characterized by** a reflector (5) which is associated with and spaced apart from the transponder (2) and is intended for increasing an antenna gain of the antenna (4), the reflector (5) being designed as a transparent, electrically conductive coating (5.1) and/or as a metal ring (5.3).

2. The vehicle window (1) according to claim 1, wherein the transparent, electrically conductive coating (5.1) has a region (6) which is permeable to electromagnetic radiation in the frequency range of the antenna (4).

3. The vehicle window (1) according to claim 2, wherein the transponder (2) or the face of the orthogonal projection of the transponder (2) is arranged in a region (6) which is permeable to electromagnetic radiation in the frequency range of the antenna (4).

4. The vehicle window (1) according to any of claims 1 to 3, wherein the reflector (2) has at least one line conductor (5.2).

5. The vehicle window (1) according to any of claims 1 to 4, wherein the reflector (5) has two line conductors (5.2) which are each arranged at the same distance from the transponder (2).

6. The vehicle window (1) according to any of claims 1 to 5, wherein the metal ring (5.3) is designed as a closed ring (5.3).

7. The vehicle window (1) according to any of claims 1 to 6, wherein the transponder (2) operates in an energy-autonomous manner.

8. The vehicle window (1) according to any of claims 1 to 7, wherein the transponder (2) is an RFID transponder.

9. The vehicle window (1) according to any of claims 1 to 8, wherein the transponder (2) operates in a frequency range of 800 MHz to 3 GHz.

10. The vehicle window (1) according to any of claims 1 to 9, wherein the identification data are provided for identifying a vehicle.

11. The vehicle window (1) according to any of claims 1 to 10, wherein the first glass pane (7) is connected to a second glass pane (9) via a thermoplastic intermediate layer (8).

12. The vehicle window (1) according to any of the preceding claims, wherein the vehicle window is a motor vehicle window.

13. A vehicle comprising a vehicle window (1) according to any of claims 1 to 12, wherein the vehicle is a motor vehicle.

14. Method for producing a vehicle window (1) according to any of claims 1 to 12, wherein at least:
a) the transponder (2) having the control unit (3) for communicating with a reader is attached to a surface of the first glass pane (7), a surface of a second glass pane (8) or between the first and the second glass pane (7, 8), the control unit (3) having a memory for storing identification data and the antenna (4), and
b) the reflector (5) which is associated with and spaced apart from the transponder (2) and is intended for increasing an antenna gain of the antenna (4) is arranged on a surface of the first glass pane (7), a surface of the second glass pane (8) or between the first and the second glass pane (7, 8).

15. Use of the vehicle window according to any of claims 1 to 12 as a windshield, rear window and/or roof window in means of transport for traffic on land, in the air or on water.

## Revendications

1. Vitre de véhicule (1), comprenant
a) une première vitre en verre (7),
b) un transpondeur (2) comportant une antenne (4) et une unité de commande (3) permettant la communication avec un appareil de lecture, dans laquelle l'unité de commande (3) comprend une mémoire pour la mémorisation de données d'identification,
**caractérisée par** un réflecteur (5) associé au transpondeur (2) et espacé de celui-ci et permettant d'augmenter le gain d'antenne de l'antenne (4), dans laquelle le réflecteur (5) est réalisé sous la forme d'un revêtement transparent électriquement conducteur (5.1) et/ou d'un anneau métallique (5.3).

2. Vitre de véhicule (1) selon la revendication 1, dans laquelle le revêtement transparent électriquement conducteur (5.1) présente une zone (6) perméable au rayonnement électromagnétique dans la plage de fréquences de l'antenne (4).

3. Vitre de véhicule (1) selon la revendication 2, dans laquelle le transpondeur (2) ou la surface de la projection orthogonale du transpondeur (2) est disposé dans une zone (6) perméable au rayonnement électromagnétique dans la plage de fréquences de l'antenne (4).

4. Vitre de véhicule (1) selon l'une des revendications 1 à 3, dans laquelle le réflecteur (2) présente au moins un conducteur de ligne (5.2).

5. Vitre de véhicule (1) selon l'une des revendications 1 à 4, dans laquelle le réflecteur (5) présente deux conducteurs de ligne (5.2) qui sont respectivement disposés à la même distance du transpondeur (2).

6. Vitre de véhicule (1) selon l'une des revendications 1 à 5, dans laquelle l'anneau métallique (5.3) est réalisé sous la forme d'un anneau fermé (5.3).

7. Vitre de véhicule (1) selon l'une des revendications 1 à 6, dans laquelle le transpondeur (2) fonctionne de manière autonome en énergie.

8. Vitre de véhicule (1) selon l'une des revendications 1 à 7, dans laquelle le transpondeur (2) est un transpondeur RFID.

9. Vitre de véhicule (1) selon l'une des revendications 1 à 8, dans laquelle le transpondeur (2) fonctionne dans une plage de fréquences de 800 MHz à 3 GHz.

10. Vitre de véhicule (1) selon l'une des revendications 1 à 9, dans laquelle les données d'identification sont prévues pour la caractérisation d'un véhicule.

11. Vitre de véhicule (1) selon l'une des revendications 1 à 10, dans laquelle la première vitre en verre (7) est reliée à une seconde vitre en verre (9) par l'intermédiaire d'une couche intermédiaire thermoplastique (8).

12. Vitre de véhicule (1) selon l'une des revendications précédentes, dans laquelle la vitre de véhicule est une vitre de véhicule automobile.

13. Véhicule, comprenant une vitre de véhicule (1) selon l'une des revendications 1 à 12, dans lequel le véhicule est un véhicule automobile.

14. Procédé de fabrication d'une vitre de véhicule (1) selon l'une des revendications 1 à 12, dans lequel au moins :
a) le transpondeur (2) est fixé à l'unité de commande (3) permettant la communication avec un appareil de lecture sur une surface de la première vitre en verre (7), une surface d'une seconde vitre en verre (8) ou entre la première et la seconde vitre en verre (7, 8), dans lequel l'unité de commande (3) présente une mémoire pour la mémorisation de données d'identification et l'antenne (4), et
b) le réflecteur (5) associé au transpondeur (2) et espacé de celui-ci et permettant d'augmenter le gain d'antenne de l'antenne (4) est disposé sur une surface de la première vitre en verre (7), une surface de la seconde vitre en verre (8) ou entre la première et la seconde vitre en verre (7, 8).

15. Utilisation de la vitre de véhicule selon l'une des revendications 1 à 12 dans des moyens de déplacement pour la circulation terrestre, aérienne ou maritime en tant que pare-brise, lunette arrière et/ou vitre de toit.
